# EUROPEAN PATENT APPLICATION

(11) **EP 4 728 875 A1**
(43) Date of publication of application: **22.04.2026**
(21) Application number: 23927267.7
(22) Date of filing: 13.03.2023
(51) Int. Cl.: A23L 15/00, A23L 3/005

(54) **METHOD AND COMPOSITION FOR PRODUCING A SPECIFIC PAUSTERISED EGG PREPARATION**

(71) Applicant: Coneier S.L., 28240 Hoyo de Manzanares (Madrid) (ES)
(72) Inventor: DRÜPPEL, Ralf Christian, 28240 Hoyo de Manzanares (Madrid) (ES)
(74) Representative: Lahidalga de Careaga, Jose Luis
(86) International application number: PCT/IB2023/052416
(87) International publication number: WO 2024/189401

(57) **Abstract**

Procedure and composition for producing a specific pasteurised egg preparation comprising 50-95% liquid beaten fresh egg and 50-5% water-based liquid mix and 3-15 g of at least one thickening gum per litre of water. The composition further includes 3-20 g of colorant per litre of water and 3-20 g of salt per litre of water. The composition may also include sweet and salty aromas. Once the product has been packed, it can be frozen without its organoleptic properties being altered.

## Description

### TECHNICAL FIELD

Food (confectionery, pastries, bakery products, dairy products, ice cream, beverages, baby food, creams and soups, mayonnaise and sauces, pasta, prepared dishes, delicatessen products, pet food, aquaculture) cosmetics, glues and adhesives, pharmaceuticals and tanning.

### BACKGROUND OF THE INVENTION

Conventionally, pasteurised eggs for industrial and domestic sale and consumption are obtained by keeping a mixture of fresh beaten eggs without shells at a constant temperature (60-65°C) for a cycle of between 2-4 minutes, and then packaging them directly.

This mixture is marketed in different formats depending on its commercial destination; the packaging for a local catering establishment is not the same as for a supermarket or large retail outlet selling directly to the consumer, or for an industrial manufacturer of egg products or pastry products.

Pasteurised eggs are used in professional cooking as a substitute for shell eggs to prevent food poisoning.

For example, it is widely used in Spain, and in Europe in general, due to the prohibition on using fresh eggs in preparations where the product is not cooked to a minimum of 73 °C at its centre, as below that temperature there is a risk of contracting salmonellosis. Pasteurisation is a process that eliminates dangerous germs (pathogens) in food. It works by applying high temperatures for short periods of time. As a general rule, it is used in dairy products and in those foods that have liquid structures. Currently, the egg pasteurisation process is carried out when the eggs arrive at the industrial processing plant, where the dirty ones are separated from the clean ones. The dirty ones are cleaned with a suitable detergent-disinfectant and authorised detergent-disinfectant at a temperature 11°C above that of the egg on arrival, and then refrigerated to 7°C to limit the growth of microorganisms in general and, in particular, Salmonella. Subsequently, and after breaking the shell, they are heat treated.

The heat pasteurisation process guarantees the elimination of any pathogenic microorganisms that may be found in liquid eggs, mainly Salmonella enteritidis, as well as maintaining the physical, chemical and technological characteristics of the product.

The food resulting from this process is free of pathogens. Consequently, its use as a raw material in the manufacture of various derivative products will maintain high levels of safety and minimise the occurrence of unpleasant health consequences. Thickening agents are substances that, when added to a mixture, increase its viscosity and improve its texture, without substantially altering its other properties such as taste or smell. They provide body, increase stability and facilitate the formation of suspensions. Thickening agents are often food additives.

Food thickeners are often based on polysaccharides (starches or vegetable gums) or proteins (egg yolk, collagen). Some common examples are agar-agar, algin, carrageenan, collagen, corn starch, gelatin, guar gum, locust bean gum, pectin-pectin and xanthan gum.

Some thickening agents are gelling agents, which form a gel that dissolves in the liquid phase as a colloidal mixture that forms a weakly cohesive internal structure. Flour is used to thicken sauces and stews. Cereals are used to thicken soups (oats, couscous). In the Middle East, it is common to use yoghurt to thicken soups. Soups can also be thickened using grated starchy vegetables. Egg yolk gives a smooth texture, but can be difficult to use. Pectin is a gelling agent for jams and marmalades. Other thickeners used in cooking are nuts or glazes made from meat or fish. Some agents such as starch lose their thickening power when the food is overcooked or mixed with acids: they become spongy when frozen. Industrial additives such as xanthan gum are stable in acidic or basic conditions and over a wide range of temperatures.

List of the most common thickeners and gums used in industry and valid for our process: Sodium alginate, Sodium carrageenan, Locust bean gum, Guar gum, Acacia gum, Tragacanth gum, Pectin, Xanthan gum, Carboxymethylcellulose, Powdered gelatine.

### EXPLANATION OF THE INVENTION

In a first practical implementation of the invention, the composition for obtaining specific pasteurised egg comprises fresh liquid beaten egg in a percentage of 50% to 95% and a liquid mixture of 50 to 5% based on water and a thickening gum in a percentage of 3 to 15 grams per litre of water, this being the basic composition for application in a multitude of products such as omelettes.

In a second practical implementation of the invention, the composition for obtaining specific pasteurised egg comprises fresh liquid beaten egg in a percentage of 50% to 95% and a liquid mixture of 50 to 5% based on water and at least one thickening gum in a percentage of 3 to 15 grams per litre of water and colouring in a percentage of 3 to 20 grams per litre of water. It is recommended for products where we want to improve the visual appearance, such as egg pasta
In a third practical application of the invention, the composition for obtaining specific pasteurised egg comprises fresh liquid beaten egg in a percentage of 50% to 95% and a liquid mixture of 50 to 5% based on water and at less, a thickening gum in a percentage of 3 to 15 grams per litre of water and salt in a percentage of 3 to 20 grams per litre of water, this composition being especially applicable in salt-based products such as mayonnaise. In a fourth practical application of the invention, the composition for obtaining specific pasteurised egg comprises fresh liquid beaten egg in a percentage of 50% to 95% and a liquid mixture of 50 to 5% based on water and at least one thickening gum in a percentage of 3 to 15 grams per litre of water, colouring in a percentage of 3 to 20 grams per litre of water and sweet flavourings in a percentage of 1 to 20 grams per litre of water, being recommended for those sweet-based products such as pastries and cakes.

In a fifth practical application of the invention, the composition for obtaining specific pasteurised egg comprises fresh liquid beaten egg in a percentage of 50% to 95% and a liquid mixture of 50 to 5% based on water and or less, a thickening gum in a percentage of 3 to 15 grams per litre of water, colouring in a percentage of 3 to 20 grams per litre of water and also savoury flavourings in a percentage of 1 to 20 grams per litre of water. It is recommended for savoury products such as meat pies.

On the other hand, to obtain the product, we define three processes for making the mixtures, so that, in a first procedure, fresh beaten liquid egg and the mixture of water with the various added products are introduced into a tank and the mixture is subjected, preferably at 4 degrees Celsius, to pasteurisation and emulsion treatment, generating a specific pasteurised egg preparation.

In a second procedure to obtain specific pasteurised egg, fresh beaten egg is added independently to the pasteuriser and, on the other hand, the mixture of water with the various added products is added.

In a second procedure for obtaining specific pasteurised egg, the fresh beaten egg is added independently to the pasteuriser and, on the other hand, the mixture of water, with all the components that may have been added to it, is added, emulsifying and pasteurising the mixture.

In a third procedure for obtaining specific pasteurised egg, all possible components related to the composition to be obtained are incorporated into a tank for emulsification and pasteurisation together.

It is very important to note that the specific pasteurised egg preparation between 50 and 95% obtained once packaged is freezable without modifying the organoleptic characteristics or disintegrating the products in the mixture, which is not the case with the product currently on the market, as it disintegrates and needs to be re-emulsified.

### BRIEF DESCRIPTION OF THE DRAWINGS

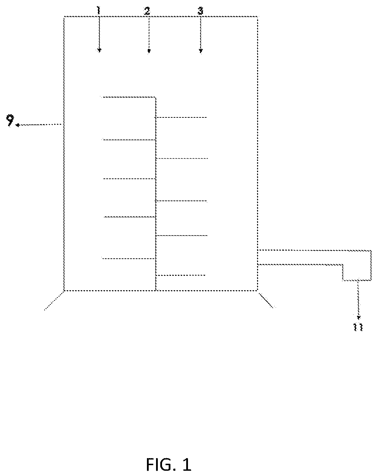

FIGURE 1 shows a view of an execution in which we incorporate all the ingredients that will form part of the composition, the subject of the invention, into a pasteuriser/emulsifier. Once the pasteurisation process is complete, the final product is packaged according to the desired format, emulsifying the ingredients inside the pasteuriser.

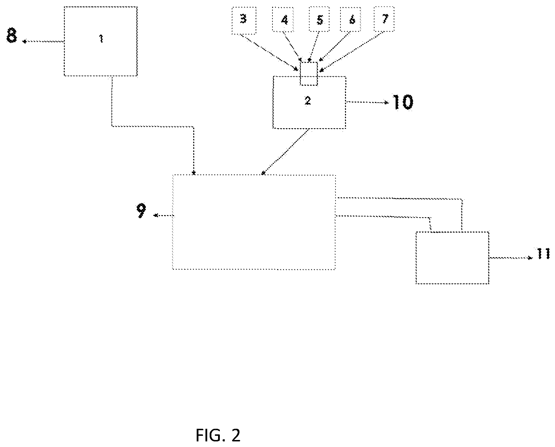

FIGURE 2 shows a view of an execution in which we incorporate, on the one hand, the fresh egg and, on the other, all the ingredients into a tank, whether emulsified or not. This system allows us to adjust the mixing level to obtain a product with a variable % depending on the desired product, emulsifying and pasteurising at the same time.

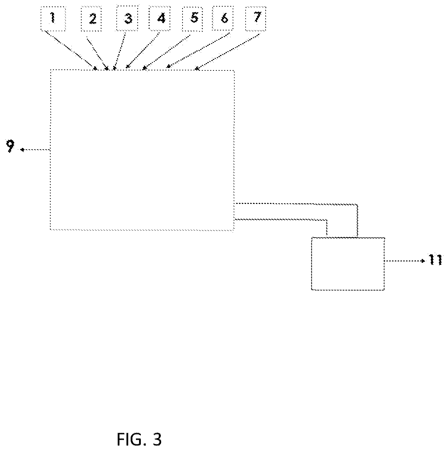

FIGURE 3 shows a view of an implementation in which we incorporate all the product variables in the desired proportion for emulsification and pasteurisation.

### PREFERRED EMBODIMENT OF THE INVENTION

In accordance with the numbering adopted in a first practical implementation of the invention, the composition for obtaining pasteurised egg comprises fresh liquid beaten egg (1) in a percentage of 50% to 95% and a liquid mixture of 50 to 5% based on water (2) and at least one thickening gum (3) in a 3 to 15 grams per litre of water, this being the basic composition for application in a multitude of products such as omelettes. The thickening gum maybe one or a mixture of several.

In a second practical implementation of the invention, the composition for obtaining pasteurised egg comprises fresh liquid beaten egg (1) in a percentage of 50% to 95% and a liquid mixture of 50 to 5% based on water (2) and at least one thickening gum (3) in a percentage of 3 to 15 grams per litre of water and colouring (4) in a percentage of 3 to 20 grams per litre of water. This is recommended for products where we want to improve the visual appearance, such as egg pasta.

In a third practical application of the invention, the composition for obtaining pasteurised egg comprises fresh liquid beaten egg (1) in a percentage of 50% to 95% and a liquid mixture of 50 to 5% based on water (2) and at least one thickening gum (3) in a percentage of 3 to 15 grams per litre of water and salt (5) in a percentage of 3 to 20 grams per litre of water, this composition being is especially applicable to salt-based products such as mayonnaise.

In a fourth practical application of the invention, the composition for obtaining pasteurised egg comprises fresh liquid beaten egg (1) in a percentage of 50% to 95% and a liquid mixture of 50 to 5% based on water (2) and at least one thickening gum (3) in a percentage of 3 to 15 grams per litre of water, colouring 30 (4) in a percentage of 3 to 20 grams per litre of water and sweet flavourings (6) in a percentage of 1 to 20 grams per litre of water, being recommended for those wheat-based products such as pastries and cakes.

In a fifth practical application of the invention, the composition for obtaining a specific pasteurised egg preparation (11) comprises fresh beaten liquid egg 35 (1) in a percentage of 50% to 95% and a liquid mixture of 50 to 5% based on water (2) and at least one thickening gum (3) in a percentage of 3 to 15 grams per litre of water, colouring (4) in a percentage of 3 to 20 grams per litre of water and also savoury flavourings (7) in a percentage of 1 to 20 grams per litre of water. It is recommended for savoury products such as meat pies.

On the other hand, to obtain the product, we define three processes for making the mixtures, so that, in a first procedure, fresh beaten liquid egg (1) and the mixture of water (2) with the various added products (3, 4, 5, 6, 7) are introduced into a tank (8) and the mixture is subjected, preferably at 4 degrees Celsius, to pasteurisation and emulsion treatment (9), generating a specific pasteurised egg (11) that is uniform and stable. In a second procedure to obtain pasteurised egg (11), the mixture of water (2) with the various added products 10 degrees Celsius, to pasteurisation and emulsion treatment (9), generating a specific pasteurised egg (11) that is uniform and stable.

In a second procedure for obtaining specific pasteurised egg (11), the fresh liquid beaten egg (1) is added independently to the pasteuriser/emulsifier (9) from a first 1 tank (8) and, on the other hand, the water mixture, with all the components that may have been added to it, is added from a second tank (10), emulsifying and pasteurising the mixture.

In a third procedure for obtaining specific pasteurised egg (11), all possible components related to the composition to be obtained are incorporated into a pasteuriser/emulsifier (9) for emulsification and pasteurisation together, obtaining the specific pasteurised egg (11).

It is very important to note that the specific pasteurised egg preparation between 50 and 95% obtained once packaged is freezable without modifying the organoleptic characteristics or disintegrating the products in the mixture, which is not the case with the product currently on the market, as it disintegrates and needs to be re-emulsified. This preparation can be marketed either on its own (water, thickener and all the additives described) or already mixed with fresh beaten egg.

The emulsion can be made from 4 degrees and is a mixture of at least two products, which can be done manually or mechanically until a homogeneous product is obtained. The process allows or permits the mixture to be emulsified and then incorporated into the egg. We believe it is more logical to emulsify and pasteurise in the same industrial step to save industrial steps. The emulsion can be made at any temperature range as long as it is above 2 degrees Celsius, with the most logical being at room temperature and 7 seeking an operating time of at least 2 minutes for the perfect integration of the ingredients to be mixed.

To understand the reason behind the product and its advantages, we must give a brief summary of the current product and market situation.

The pasteurised egg market is stable, with high demand and highly fragmented, but seriously exposed to epidemics and price fluctuations because, although the market is linear, there are times of the year with higher demand for the product, such as Christmas and all the sweet treats, and others with much less demand. This causes the industry to act like a spring, adapting production to demand. As a result, the broods and the 'planting' of laying hens are planned. The market is accustomed to dealing with this seasonality and adapts to the situations, but there are two elements that cannot be predicted today: outbreaks of avian influenza and the geopolitical context that has dramatically changed agricultural operations in general and poultry farming in particular.

Currently, there is an avian flu pandemic in Europe that is forcing the culling of countless birds in all countries, which is causing a significant decline in the ability to supply the market and meet demand, raising product prices to levels that were unimaginable just a couple of years ago, when the COVID pandemic began and the market came to a standstill due to a lack of demand. On the other hand, energy costs have multiplied by up to four times in a very short period of time due to the conflict between Ukraine and Russia, leading to the closure of many companies in all sectors, with the primary sector being one of the most exposed and damaged by this conflict.

Our invention is defined as the ability to transform water into a structure identical to that of an egg by including varying proportions of thickeners, thickening gums, salt and colouring. Although not all products contain the same ingredients, the basis for obtaining them is based on these ingredients. Once mixed in the right proportions and combined with fresh beaten egg, the result is a pasteurised egg that is much better organoleptically, cheaper to produce and has the same satiating effect as one made from egg alone.

The use of water is justified by its ability to increase the volume of the ingredient to which it is added and its price. The thickener or gums thickeners are added to give the water the viscosity necessary to mimic that of the egg, the colouring to prevent the colour from diluting, and the salt to preserve the mixture as a governing liquid and not dilute the natural sodium that the egg already contains, as well as adding a slight touch of flavour to the formulation.

These ingredients have been selected objectively and carefully so that they can be mixed with fresh eggs and do not clog any of the pasteuriser's pipes, since if we were to introduce other ingredients, the pipes would become clogged, causing the machinery to stop and break down.

Another absolutely revolutionary and innovative feature is the ability to manufacture specific products for specific industries. For a buyer or user of industrially pasteurised eggs, the colour of the egg is essential, which is linked to the type of feed the hen receives. With our method, we can create a specific pasteurised egg for the baking industry by increasing the level of colouring, which, in turn, will not need to be added to the final mixture, resulting in a pasteurised egg with a more intense colour, containing less fresh egg and behaving exactly like the 100% egg product.

If we also add water, thickener or thickening gums, vanilla or sugar flavourings and colouring to the mixture, we will obtain a pasteurised egg that is practically ready to mix with flour to make a sponge cake without the need to add anything else to the process.

Another clear example is the production of pasteurised eggs for making omelettes.

Our formula allows us to create a pasteurised egg with 75% fresh egg and 25% formula, without altering the preparation times and significantly improving the final result, as during the cooking process, the water that evaporates cooking is not from the egg itself but from the formula, achieving an exceptional result as the product does not dehydrate during cooking and remains juicier, also preventing the product from drying out over time.

This is due to the greater amount of water in the mixture, but when mixed with thickeners or thickening gums, it transforms into a substance 30 that is exactly the same as egg.

### EXAMPLES

1 To obtain a pasteurised egg specifically designed for the pastry industry, 6 litres of fresh liquid beaten egg and 4 litres of a mixture based on 4 litres of water and 55 grams of thickening gum, for example xanthan gum, 48 grams of colouring, for example curcumin, and 80 grams of flavouring, for example apple, are added to a pasteuriser/emulsifier with an appropriate volume capacity thickening gum, for example xanthan gum, 48 grams of colouring, for example curcumin, and 80 grams of flavouring, for example apple, to obtain a pasteurised egg specifically for making apple cake.

2 To obtain pasteurised egg specifically for the production of industrial mayonnaise, 5 litres of fresh liquid beaten egg and 5 litres of a mixture based on 5 litres of water and 75 grams of a thickening gum, e.g. xanthan gum xanthan gum, 60 grams of colouring, for example, curcumin, and 100 grams of salt to obtain a pasteurised egg specifically for the production of industrial mayonnaise
We want to define that the production of a specific pasteurised egg means combining technical knowledge with experience to obtain a better product. Doing it the same way for 70 years does not mean that it is the right way, but rather that we did not know any other way of doing it. And all this brings us to our method of producing specific pasteurised eggs.

Let's take a very simple example. If we look at a traditional recipe for making a common sponge cake, a standard recipe used anywhere in the world, we see that the use of eggs is essential for making it, but at the same time, the use of sugar is disproportionate compared to the other ingredients. There is a very simple explanation for this: the sugar must compensate for the neutrality of the flour and correct the natural sodium in the egg in order to obtain a sweet sponge cake, as the rest of the ingredients are neutral in terms of flavour, with the exception of the fat, which does add flavour, and the flavourings.

In other words, we need a lot of sugar to flavour a mixture because the main ingredients do not give us a sweet taste, but rather the opposite: they either give us no taste or a salty taste.

Ingredients for a basic sponge cake 1 unit
- Eggs - 5 units
- Flour - 250 grams
- Sugar - 250 grams
- Milk - 50 millilitres
- Olive oil - 50 millilitres
- Baking powder - half a sachet
- Vanilla essence or vanilla sugar
- Zest of one lemon
- Salt

If, in addition to all this, we add the current regulations on food safety, we find that whether we use pasteurised or fresh eggs, we are obliged to correct the excess sodium in the egg in any way possible. All this led us to think that although eggs are an indispensable ingredient in the manufacture of thousands of products, we do not expect the same result in each of these products. In other words, we do not obtain the same result using the same amount of product to make an omelette or scrambled eggs. Why is this? Because we seek the best version of the product by applying different cooking techniques, even though it is the same product. We can make a 100-gram omelette using only eggs, or we can make scrambled eggs using 100 grams of product. The only thing that varies is the cooking technique (time, temperature and humidity of the product).

So far, we have raised two important questions: the first is the natural sodium present in eggs and the adaptation of eggs to the specific cooking technique for each product. All this led us to consider how to modify the structure of the product to obtain a specific pasteurised egg for each of the products in which eggs are used.

We had to find a way to make the egg perform at its best in each of the techniques without losing its specific characteristics.

We started by lightening the traditional formulas, reducing the proportion of egg with water, but we did not get the right response because all we achieved was a dilution of the egg, resulting in a lighter product, but when we applied the cooking technique, the result was that the structure of the product broke down broke down and, for example, when making an omelette, the product did not set in the frying pan. In other words, if we added 20 ml of water to 80 ml of pasteurised egg, not only did we fail to reduce the sodium content of the egg, but we were unable to make an omelette in the frying pan. We knew that adding water was essential to reduce the sodium, but the water did not provide 'structure' to the product. After many tests, we came up with a question. What if we cloned the density, colour and aroma of the egg in water?

With this clear idea in mind, we began to add elements to the water to obtain water that had the texture, colour and aroma of an egg, but once mixed, we were unable to achieve the desired result.

With a clear idea in mind, we began adding elements to the water to obtain water that had the texture, colour and aroma of an egg, but once mixed we were unable to achieve the desired result. We tested it together and separately, in a pan, in the oven, during cooking, we tried all possible ways of using eggs, but the result was not what we expected until we discovered that to obtain water with the aroma, body and colour of an egg, we had to emulsify the mixture (thickener, colouring and egg) so that when mixed with the egg, the final result was a homogeneous mass of specific egg. It was starting to make sense. On the one hand, I have egg, and on the other, I have water which, when emulsified with thickener, colouring and a little salt, looks exactly like egg and gives me a product that, when formulated correctly, results in a specific pasteurised egg for each cooking technique and for each product where egg is used. In other words, by applying one mixture or another, I can obtain the perfect mixture for making set but juicy omelettes or scrambled eggs that are juicy but not set, even though they are cooked within the margins set by food safety regulations. Why can I make scrambled eggs above 73 degrees that are juicy and do not curdle? Because when the egg is diluted with emulsified water, the final result is a product rich in water that, when cooked, does not allow the natural water in the egg to dehydrate, but rather evaporates the added water and prevents dehydration and coagulation.

## Claims

1. Composition for obtaining a specific pasteurised egg preparation (11), **characterised in that** it comprises fresh liquid beaten egg (1) in a percentage of 50% to 95% and a liquid mixture of 50 to 5% based on water (2) and at least one thickening gum (3) in a percentage of 3 to 15 grams per litre of water.

2. Composition for obtaining a specific pasteurised egg preparation 10 (11), according to the first claim, because the composition also comprises colouring (4) in a percentage of 3 to 20 grams per litre of water.

3. Composition for obtaining a specific pasteurised egg preparation (11), according to the first claim, **characterised in that** the composition further comprises salt (5) in a percentage of 3 to 20 grams per litre of water.

4. Composition for obtaining a specific pasteurised egg preparation (11), according to claims 1 and 2, because the composition also comprises sweet flavourings (6) in a percentage of 1 to 20 grams per litre of water.

5. Composition for obtaining a specific pasteurised egg preparation (11), according to claims 1, 2 and 3, **characterised in that** the composition also comprises savoury flavourings (7) in a percentage of 1 to 20 grams per litre of water.

6. Process for obtaining a specific pasteurised egg preparation (11), in accordance with the previous claims relating to the composition, **characterised in that** fresh liquid beaten egg (1) and the mixture of water (2) with the various added products (3, 4, 5, 6, 7) are introduced into a tank 35 (3, 4, 5, 6, 7) are added, and the mixture is subjected, preferably at 4 degrees Celsius, to pasteurisation and emulsion treatment, generating a uniform and stable specific pasteurised egg preparation (11).

7. Process for obtaining a specific pasteurised egg preparation (11), in accordance with the previous claim 5, **characterised by** adding the mixture of water (2), thickener (3) and colouring agent (4) directly to the fresh egg (1).

8. Process for obtaining a specific pasteurised egg preparation (11), in accordance with the previous claims relating to the composition, **characterised by** adding the resulting mixture of water (2), thickener (3), colouring agent (4), salt (5) and/or flavourings (6,7) directly to the fresh egg (1).

9. Process for obtaining a specific pasteurised egg preparation (11), in accordance with the previous claims relating to the process, **characterised in that** the product, once packaged, can be frozen without altering the organoleptic characteristics or causing the mixture products to separate.
